# EUROPÄISCHE PATENTANMELDUNG

(11) **EP 4 120 437 A1**
(43) Veröffentlichungstag der Anmeldung: **18.01.2023**
(21) Anmeldenummer: 22182855.1
(22) Anmeldetag: 04.07.2022
(51) Int. Cl.: H01M 10/613, H01M 10/625, H01M 10/6552, H01M 10/6555, H01M 10/6557, H01M 10/6568, H01M 50/20, B60L 50/64

(54) **VORRICHTUNG ZUR KÜHLUNG VON BATTERIEZELLEN EINER TRAKTIONSBATTERIE EINES KRAFTFAHRZEUGS UND TRAKTIONSBATTERIE**

(30) Priorität: 14.07.2021 DE 102021118249
(71) Anmelder: Dr. Ing. h.c. F. Porsche Aktiengesellschaft, 70435 Stuttgart (DE); Rimac Automobiles Ltd., 10431 Sveta Nedelja (HR)
(72) Erfinder: Renz, Fadi, 70806 Kornwestheim (DE); Ulrich, Philip, 71640 Ludwigsburg (DE); Dervisevic, Drazen, 1000 Zagreb (HR); Skutari, Matko, 47000 Karlovac (HR); Vinkovic, Inge, 10430 Samobor (HR)
(74) Vertreter: Sturm, Christoph

(57) **Zusammenfassung**

Vorrichtung (10) zur Kühlung von in mindestens zwei übereinander positionierten Batteriezellenebenen (11, 12) angeordneten Batteriezellen (13) einer Traktionsbatterie, mit einer zwischen einer ersten Batteriezellenebene (11) und einer zweiten Batteriezellenebene (12) angeordneten ersten Kühlplatte (14), die in thermischem Kontakt mit den Batteriezellen (13) der ersten und zweiten Batteriezellenebene steht, mit innerhalb der ersten und zweiten Batteriezellenebene (11, 12) angeordneten zweiten Kühlplatten (15), die in thermischem Kontakt mit mehreren Batteriezellen (13) der jeweiligen Batteriezellenebene stehen, mit einem Kühlfluideinlass (16a), der an einer ersten Seite der ersten Kühlplatte ausgebildet ist, und mit einem Kühlfluidauslass (16b), der an einer zweiten Seite der ersten Kühlplatte ausgebildet ist, wobei das Kühlfluid vom Kühlfluideinlass (16a) an der ersten Seite der ersten Kühlplatte (14) in die erste Kühlplatte strömt, wobei ein erster Teil des in die erste Kühlplatte (14) strömenden Kühlfluids durch die erste Kühlplatte (14) hindurch in Richtung auf die zweite Seite der ersten Kühlplatte strömt, wobei ein zweiter Teil des in die erste Kühlplatte (14) strömenden Kühlfluids an der ersten Seite der ersten Kühlplatte von der ersten Kühlplatte (14) in die zweiten Kühlplatten (15) strömt, die zweiten Kühlplatten durchströmt und an der zweiten Seite der ersten Kühlplatte von den zweiten Kühlplatten (15) in die erste Kühlplatte (14) strömt, und wobei das Kühlfluid an der zweiten Seite der ersten Kühlplatte (14) von der ersten Kühlplatte in den Kühlfluidauslass (16b) strömt.

## Beschreibung

Die Erfindung betrifft eine Vorrichtung zur Kühlung von in mindestens zwei übereinander positionierten Batteriezellenebenen angeordneten Batteriezellen einer Traktionsbatterie eines Kraftfahrzeugs. Ferner betrifft die Erfindung eine Traktionsbatterie.

In Kraftfahrzeugen, wie zum Beispiel in Hybridfahrzeugen oder auch Elektrofahrzeugen, sind Traktionsbatterien verbaut, die der Speicherung elektrischer Energie dienen, um dieselbe einer elektrischen Maschine bereitzustellen. Traktionsbatterien verfügen dabei über mehrere Batteriezellen, die untereinander elektrisch verschaltet sind. Im Betrieb unterliegen die Batteriezellen, zum Beispiel infolge von chemischen Reaktionen innerhalb der Batteriezellen, einer Erwärmung. Um eine Beschädigung der Traktionsbatterie infolge von einer Überhitzung der Batteriezellen zu vermeiden, muss durch Kühlung der Batteriezellen Wärme von der Traktionsbatterie abgeführt werden. Es ist bereits bekannt, die Batteriezellen einer Traktionsbatterie zu kühlen.

DE 10 2006 059 989 A1 offenbart eine Batterie mit mehreren Batteriezellen, wobei die Batteriezellen im thermischen Kontakt mit einer Grundplatte stehen und die thermische Kontaktierung der Batteriezellen mit der Grundplatte über Kühlelemente erfolgt, die in den Zwickel der dichtesten Packung der Batteriezellen angeordnet sind. Die Außenkontur der Kühlelemente hat eine trigonale Symmetrie und kontaktiert die Batteriezellen auf zylindrischen Außenseiten derselben. Die Kühlplatte ist von einem Kühlmedium durchströmt.

DE 10 2012 111 970 A1 offenbart eine weitere Batterie mit mehreren Batteriezellen, die jeweils zwei Terminals aufweisen. An einer Terminalplatte ist jeweils ein Terminal jeder der Batteriezellen formschlüssig und/oder kraftschlüssig angeordnet, wodurch die Batteriezellen miteinander verschaltet sind. Oberhalb der Terminalplatte ist eine Lochplatte angeordnet, durch deren Löcher ein Kühlmedium eingespritzt werden kann.

Es besteht Bedarf an einer Vorrichtung zur Kühlung der Batteriezellen einer Traktionsbatterie eines Kraftfahrzeugs, die bei kompakter Bauform eine effektive Kühlung der Batteriezellen gewährleistet.

Aufgabe der Erfindung ist es, eine neuartige Vorrichtung zur Kühlung von in mindestens zwei übereinander positionierten Batteriezellenebenen angeordneten Batteriezellen einer Traktionsbatterie eines Kraftfahrzeugs und eine Traktionsbatterie mit einer solchen Vorrichtung zur Kühlung der Batteriezellen zu schaffen.

Diese Aufgabe wird durch eine Vorrichtung zur Kühlung von in mindestens zwei übereinander positionierten Batteriezellenebenen angeordneten Batteriezellen einer Traktionsbatterie eines Kraftfahrzeugs nach Anspruch 1.

Die erfindungsgemäße Vorrichtung weist eine zwischen einer ersten Batteriezellenebene und einer zweiten Batteriezellenebene angeordnete erste Kühlplatte auf, die in thermischem Kontakt mit den Batteriezellen der ersten Batteriezellenebene und in thermischem Kontakt mit den Batteriezellen der zweiten Batteriezellenebene steht.

Die erfindungsgemäße Vorrichtung weist ferner mindestens eine innerhalb der ersten Batteriezellenebene angeordnete zweite Kühlplatte und mindestens eine innerhalb der zweiten Batteriezellenebene angeordnete weitere zweite Kühlplatte auf, die in thermischem Kontakt mit mehreren Batteriezellen der jeweiligen Batteriezellenebene stehen.

Die erfindungsgemäße Vorrichtung weist ferner einen Kühlfluideinlass, der an einer ersten Seite der ersten Kühlplatte ausgebildet ist, und einen Kühlfluidauslass, der an einer zweiten Seite der ersten Kühlplatte ausgebildet ist, auf.

Die erste Kühlplatte und der Kühlfluideinlass sind derart ausgebildet, dass das Kühlfluid vom Kühlfluideinlass an der ersten Seite der ersten Kühlplatte in die erste Kühlplatte strömt.

Die erste Kühlplatte und die zweiten Kühlplatte sind ausgebildet, dass ein erster Teil des an der ersten Seite in die erste Kühlplatte strömenden Kühlfluids durch die erste Kühlplatte hindurch in Richtung auf die zweite Seite der ersten Kühlplatte strömt. Ferner derart, dass ein zweiter Teil des an der ersten Seite in die erste Kühlplatte strömenden Kühlfluids an der ersten Seite der ersten Kühlplatte von der ersten Kühlplatte in die zweiten Kühlplatten strömt, die zweiten Kühlplatten durchströmt und an der zweiten Seite der ersten Kühlplatte von den zweiten Kühlplatten in die erste Kühlplatte strömt.

Die erste Kühlplatte und der Kühlfluidauslass sind derart ausgebildet, dass das Kühlfluid an der zweiten Seite der ersten Kühlplatte von der erste Kühlplatte in den Kühlfluidauslass strömt.

Eine solche Vorrichtung erlaubt bei besonders kompakter Bauform eine besonders effektive Kühlung von in mindestens zwei übereinander positionierten Batteriezellenebenen angeordneten Batteriezellen einer Traktionsbatterie einer Kraftfahrzeugs.

Vorzugsweise ist an der ersten Seite der ersten Kühlplatte ein erster Strömungskanal der ersten Kühlplatte und an der zweiten Seite der ersten Kühlplatte, die der ersten Seite der ersten Kühlplatte gegenüberliegt, ein zweiter Strömungskanal der ersten Kühlplatte ausgebildet, wobei sich zwischen dem ersten Strömungskanal der ersten Kühlplatte und dem zweiten Strömungskanal der ersten Kühlplatte mehrere dritte Strömungskanäle der ersten Kühlplatte erstrecken. Der erste Strömungskanal der ersten Kühlplatte ist mit dem Kühlfluideinlass, den zweiten Kühlplatten und den dritten Strömungskanälen der ersten Kühlplatte gekoppelt. Der zweite Strömungskanal der ersten Kühlplatte ist mit dem Kühlfluidauslass, den zweiten Kühlplatten und den dritten Strömungskanälen der ersten Kühlplatte gekoppelt. Auch diese Merkmale dienen der effektiven Kühlung der in mindestens zwei übereinander angeordneten Batteriezellenebenen angeordneten Batteriezellen der Traktionsbatterie bei kompakter Bauform.

Vorzugsweise weist die jeweilige zweite Kühlplatte an der ersten Seite der ersten Kühlplatte einen ersten Strömungskanal auf, der in einen ersten Teilkanal und einen zweiten Teilkanal unterteilt ist, und an der zweiten Seite der ersten Kühlplatte einen zweiten Strömungskanal, der ebenfalls in einen ersten Teilkanal und einen zweiten Teilkanal unterteilt ist, wobei sich zwischen dem ersten Strömungskanal der jeweiligen zweiten Kühlplatte und dem zweiten Strömungskanal der jeweiligen zweiten Kühlplatte mindestens ein dritter Strömungskanal der jeweiligen zweiten Kühlplatte erstreckt. Der erste Teilkanal des ersten Strömungskanals der jeweiligen zweiten Kühlplatte ist mit dem ersten Strömungskanal der ersten Kühlplatte gekoppelt. Der zweite Teilkanalkanal des zweiten Strömungskanals der jeweiligen zweiten Kühlplatte ist mit dem zweiten Strömungskanal der ersten Kühlplatte gekoppelt. Hiermit kann die Effektivität der Kühlung der in zwei übereinander angeordneten Batteriezellenebenen angeordneten Batteriezellen einer Traktionsbatterie bei gleichzeitig kompakter Bauform weiter gesteigert werden.

Vorzugsweise weist der erste Strömungskanal der jeweiligen zweiten Kühlplatte ein Außenrohr auf, welches in zwei getrennte Teilkammern unterteilt ist, wobei eine erste Teilkammer des ersten Strömungskanals der jeweiligen zweiten Kühlplatte mit einem der mehreren dritten Strömungskanäle der jeweiligen zweiten Kühlplatte und mit dem ersten Strömungskanal der ersten Kühlplatte gekoppelt ist, und wobei eine zweite Teilkammer des ersten Strömungskanals der zweiten Kühlplatte mit den anderen der mehreren dritten Strömungskanäle der jeweiligen zweiten Kühlplatte gekoppelt ist. Insbesondere ist der erste Strömungskanal der jeweiligen zweiten Kühlplatte von dem Außenrohr und einem Innenrohr gebildet, wobei sich das Innenrohr ausgehend von der ersten Kühlplatte gesehen teilweise innerhalb des Außenrohrs erstreckt und in die erste Teilkammer des Außenrohrs mündet, die von der zwischen dem Innenrohr und dem Außenrohr positionierten zweiten Teilkammer des Außenrohrs getrennt ist, wobei ein Hohlraum des Innenrohrs und die erste Teilkammer des Außenrohrs den ersten Teilkanal des ersten Strömungskanals der jeweiligen zweiten Kühlplatte bilden, wobei die zweite Teilkammer des Außenrohrs den zweiten Teilkanal des ersten Strömungskanals der jeweiligen zweiten Kühlplatte bildet. Die erste Teilkammer des ersten Strömungskanal der jeweiligen zweiten Kühlplatte ist mit dem ersten Strömungskanal der ersten Kühlplatte und mit einem von mehreren dritten Strömungskanälen der jeweiligen zweiten Kühlplatte gekoppelt. Die zweite Teilkammer des ersten Strömungskanals der jeweiligen zweiten Kühlplatte ist mit den anderen der dritten Strömungskanäle der jeweiligen zweiten Kühlplatte gekoppelt. Diese Merkmale sind besonders bevorzugt, um eine Strömungsführung des Kühlfluids im Bereich des ersten Strömungskanals der jeweiligen zweiten Kühlplatte zu ermöglichen und so bei kompakter Bauform gleichzeitig eine effektive Kühlung zu gewährleisten.

Vorzugsweise ist der zweite Strömungskanal der jeweiligen zweiten Kühlplatte von einem Außenrohr gebildet, das in zwei getrennte Teilkammern unterteilt ist, wobei eine zweite Teilkammer des den zweiten Strömungskanal der zweiten Kühlplatte bildenden Außenrohrs den zweiten Teilkanal des zweiten Strömungskanals bildet und mit einem der mehreren dritten Strömungskanäle der jeweiligen zweiten Kühlplatte und mit dem zweiten Strömungskanal der ersten Kühlplatte gekoppelt ist, und wobei eine erste Teilkammer des den zweiten Strömungskanal der zweiten Kühlplatte bildenden Außenrohrs den ersten Teilkanal des zweiten Strömungskanals bildet mit den anderen der mehreren dritten Strömungskanäle der jeweiligen zweiten Kühlplatte gekoppelt ist. Diese Merkmale sind von Vorteil, um im Bereich des zweiten Strömungskanals der jeweiligen zweiten Kühlplatte eine vorteilhafte Kühlfluidströmung und damit eine effektive Kühlung der Batteriezellen bei gleichzeitig kompakter Bauform bereitzustellen.

Die erfindungsgemäße Traktionsbatterie ist in Anspruch 11 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht einer Vorrichtung zur Kühlung von in mindestens zwei übereinander positionierten Batteriezellenebenen angeordneten Batteriezellen einer Traktionsbatterie eines Kraftfahrzeugs,
- Fig. 2: einen Querschnitt durch die Vorrichtung im Bereich des Details II der Fig. 1 zusammen mit einem Schlauch,
- Fig. 3: eine Seitenansicht der Vorrichtung gemäß Fig. 1,
- Fig. 4: ein erstes Detail der Fig. 3,
- Fig. 5: ein zweites Detail der Fig. 3,
- Fig. 6: eine perspektivische Ansicht eines Details der Vorrichtung gemäß Fig. 1,

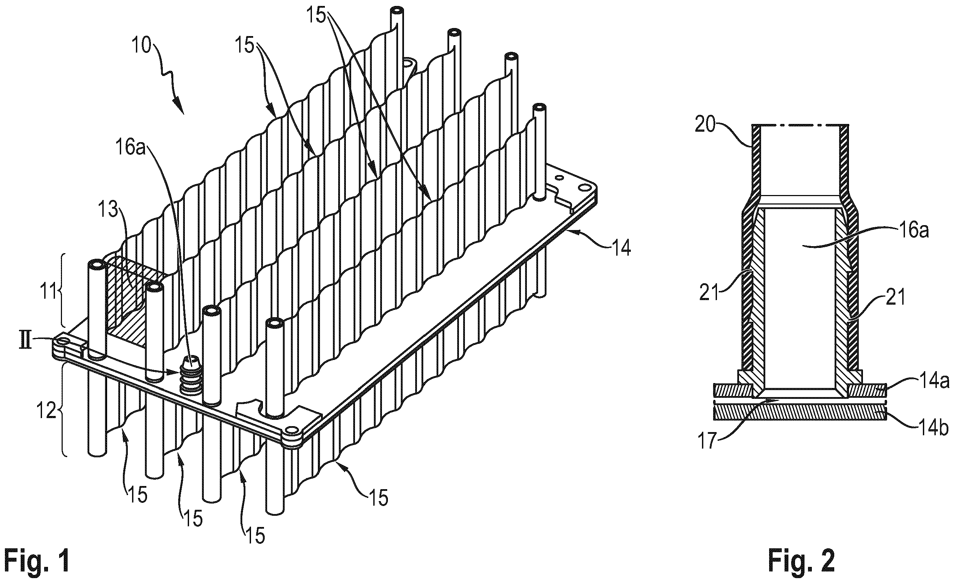

Fig. 1 zeigt ein bevorzugtes Ausführungsbeispiel einer erfindungsgemäßen Vorrichtung zur Kühlung von in mindestens zwei übereinander positionierten Batteriezellenebenen angeordneten Batteriezellen einer Traktionsbatterie eines Kraftfahrzeugs.

Im Ausführungsbeispiel der Fig. 1 dient die dort gezeigte Vorrichtung 10 der Kühlung von in zwei übereinander angeordneten Batteriezellenebenen 11, 12 angeordneten Batteriezellen 13, wobei in Fig. 1 lediglich eine solche Batteriezelle 13 in der oberen Batteriezellenebene 11 gezeigt ist.

Die Vorrichtung 10 verfügt über eine zwischen der ersten Batteriezellenebene 11 und der zweiten Batteriezellenebene 12 angeordnete erste Kühlplatte 14, die in thermischem Kontakt mit den Batteriezellen 13 der ersten Batteriezellenebene 11 und in thermischem Kontakt mit den Batteriezellen 13 der zweiten Batteriezellenebene 12 steht. So steht diese erste Kühlplatte 14 mit einer Unterseite der Batteriezellen 13 der ersten Batteriezellenebene 11 und mit einer Oberseite der Batteriezellen 13 der zweiten Batteriezellenebene 12 in thermischem Kontakt.

In der ersten Batteriezellenebene 11 sind an der Oberseite der Batteriezellen 13 und in der zweiten Batteriezellenebene 12 an der Untersete der Batteriezellen 13 elektrische Kontakte der Batteriezellen 13 ausgebildet. Diejenigen Seiten der jeweiligen Batteriezellen 13, an welchen die elektrischen Kontakte der Batteriezellen 13 ausgebildet sind, sind also von der erste Kühlplatte 14 abgewandt. Die Batteriezellen 13 liegen demnach mit von den elektrischen Kontakten der Batteriezellen 13 abgewandten Seiten an der ersten Kühlplatte 14 an.

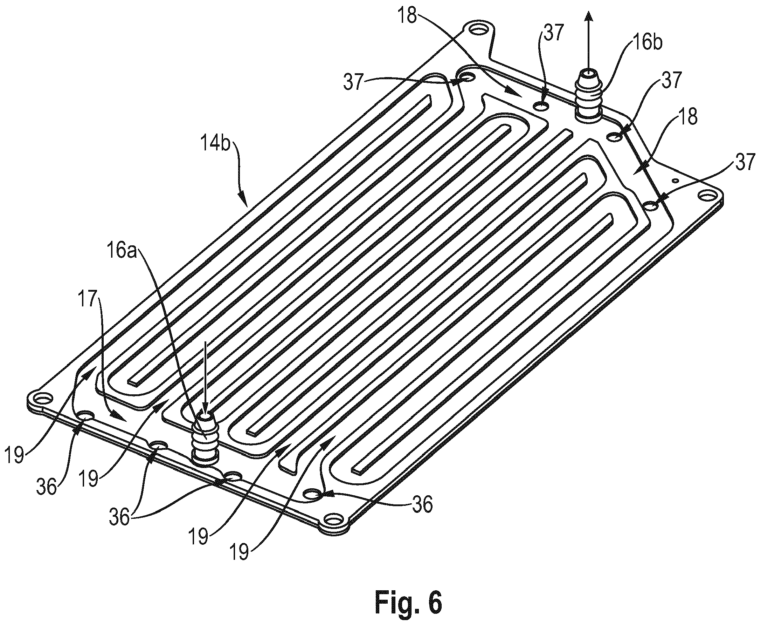

Die erste Kühlplatte 14 ist von einem Kühlfluid durchströmt und verfügt über einen sandwichartigen Aufbau aus drei Teilplatten 14a, 14b und 14c. Die beiden Teilplatten 14a, 14c bilden die Außenseiten der ersten Kühlplatte 14, über welche die erste Kühlplatte 14 mit den Batteriezellen 13 der beiden Batteriezellenebenen 11, 12 in thermischem Kontakt steht. Die Teilplatte 14b ist sandwichartig zwischen den Teilplatten 14a, 14c angeordnet und definiert zusammen mit den Teilplatten 14a, 14c Strömungskanäle der ersten Kühlplatte 14 für das Kühlmedium, wobei Fig. 6 eine perspektivische Ansicht dieser mittleren Teilplatte 14b der ersten Kühlplatte 14 zeigt.

Die Vorrichtung 10 verfügt ferner innerhalb der ersten Batteriezellenebene 11 über mindestens eine, im gezeigten Ausführungsbeispiel über insbesondere vier, zweite Kühlplatten 15. Ebenso verfügt die Vorrichtung 10 in der zweiten Batteriezellenebene 12 über mindestens eine, im gezeigten Ausführungsbeispiel über insbesondere vier, weitere zweite Kühlplatten 15. Ebenso wie die erste Kühlplatte 14 sind auch die zweiten Kühlplatten 15 von dem Kühlfluid durchströmt, wobei jede der zweiten Kühlplatten 15 in thermischem Kontakt mit mehreren Batteriezellen 13 der jeweiligen Batteriezellenebene 11 bzw. 12 steht, nämlich mit Seitenwänden der Batteriezellen 13.

Die Vorrichtung 10 verfügt weiterhin über einen Kühlfluideinlass 16a bzw. Kühlfluidzulauf, der an einer ersten Seite der ersten Kühlplatte 14 ausgebildet ist, darüber hinaus über einen Kühlfluidauslass 16b bzw. Kühlfluidablauf, der an einer gegenüberliegenden zweiten Seite der ersten Kühlplatte 14 ausgebildet ist.

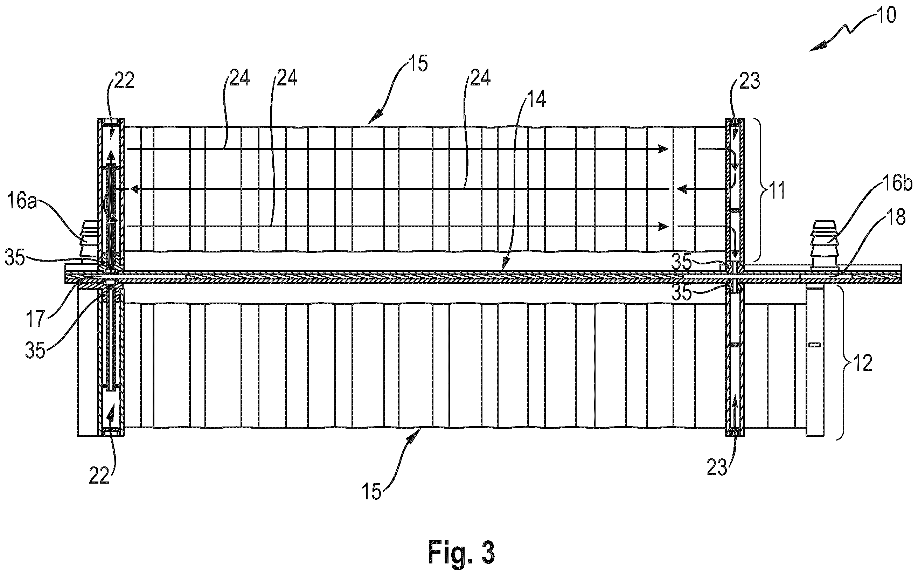

In Fig. 1 ist lediglich der Kühlfluideinlass 16a zu sehen. In Fig. 3 ist sowohl Kühlfluideinlass 16a als auch Kühlfluidauslass 16b gezeigt.

Das Kühlfluid strömt vom Kühlfluideinlass 16a an der ersten Seite der ersten Kühlplatte 14 in die erste Kühlplatte 14 ein.

Ein erster Teil dieses an der ersten Seite in die erste Kühlplatte 14 einströmenden Kühlfluids strömt durch die erste Kühlplatte 14 hindurch in Richtung auf die gegenüberliegende zweite Seite der ersten Kühlplatte 14.

Ein zweiter Teil des an der ersten Seite in die erste Kühlplatte 14 einströmenden Kühlfluids strömt an der ersten Seite der ersten Kühlplatte 14 von der ersten Kühlplatte 14 in die zweiten Kühlplatten 15, durchströmt die zweiten Kühlplatten 15 und strömt an der zweiten Seite der ersten Kühlplatte 14 von den zweiten Kühlplatten 15 zurück in die erste Kühlplatte 14. An der zweiten Seite der ersten Kühlplatte 14 strömt dann das Kühlfluid von der ersten Kühlplatte 14 in den Kühlfluidauslass 16b.

Die erfindungsgemäße Vorrichtung erlaubt bei kompakter Bauform eine besonders effektive Kühlung der Batteriezellen 13 einer Traktionsbatterie eines Kraftfahrzeugs.

Wie oben bereits ausgeführt, bilden die Teilplatten 14a, 14b, 14c der ersten Kühlplatte 14 zusammen Strömungskanäle für Kühlfluid aus. Hierzu ist die mittlere Teilplatte 14b, die oben und unten von den Teilplatten 14a, 14c abgedeckt ist, vorzugsweise wie in Fig. 6 gezeigt konturiert, um gemeinsam mit den Teilplatten 14a, 14c Strömungskanäle der ersten Kühlplatte 14 auszubilden.

Wie Fig. 6 entnommen werden kann, ist an der ersten Seite der ersten Kühlplatte 14 ein erster Strömungskanal 17 ausgebildet. An dieser ersten Seite ist auch der Kühlfluideinlass 16a ausgebildet.

An der gegenüberliegenden zweiten Seite der Kühlplatte 14, an welcher der Kühlfluidauslass 16b ausgebildet ist, ist ein zweiter Strömungskanal 18 der ersten Kühlplatte 14 ausgebildet.

Zwischen dem ersten Strömungskanal 17 der ersten Kühlplatte 14 und dem zweiten Strömungskanal 18 der ersten Kühlplatte 14 erstrecken sich mehrere dritte Strömungskanäle 19 der ersten Kühlplatte 14.

Jeder dieser dritten Strömungskanäle 19 der ersten Kühlplatte 14 ist vorzugswese mäanderartig ausgebildet.

Jeder der dritten Strömungskanäle 19 der ersten Kühlplatte 14 ist derart mäanderartig ausgebildet, dass sich der jeweilige dritte Strömungskanal 19 zunächst ausgehend von der ersten Seite der ersten Kühlplatte 14 und damit ausgehend vom ersten Strömungskanal 17 derselben in Richtung auf die zweite Seite der ersten Kühlplatte 14, dann zurück von der zweiten Seite der Kühlplatte 14 in Richtung auf die erste Seite der ersten Kühlplatte 14 und anschließend wiederum zurück von der ersten Seite der Kühlplatte 14 in Richtung auf die zweite Seite der Kühlplatte 14 in Richtung auf den zweiten Strömungskanal 18 der ersten Kühlplatte 14 erstreckt, sodass das Kühlfluid, welches durch die dritten Strömungskanäle 19 der ersten Kühlplatte 14 strömt, mehrfach zwischen der ersten Seite und der zweiten Seite der ersten Kühlplatte 14 hin und her strömt, bevor das Kühlfluid in den Bereich des zweiten Strömungskanals 18 der ersten Kühlplatte 14 gelangt. Der erste Strömungskanal 17 und der zweite Strömungskanal 18 der ersten Kühlplatte 14 weisen jeweils eine größere Strömungsquerschnittsfläche als die dritten Strömungskanäle 19 der ersten Kühlplatte 14 auf. Dies ist für eine vorteilhafte Durchströmung der ersten Kühlplatte 14 mit Kühlfluid und demnach für eine besonders effiziente Kühlung der Batteriezellen 13 über die erste Kühlplatte 14 von Vorteil. Insbesondere wird eine gleichförmige Strömungsverteilung innerhalb der ersten Kühlplatte 14 gewährleistet.

Der erste Strömungskanal 17 der ersten Kühlplatte 14 ist mit dem Kühlfluideinlass 16a, den zweiten Kühlplatten 15 und den dritten Strömungskanälen 19 der ersten Kühlplatte 14 fluidisch gekoppelt. Fluidisch bedeutet kühlmittelströmungsseitig. Beim Kühlmittel handelt es sich um ein Kühlfluid, insbesondere eine Kühlflüssigkeit wie zum Beispiel Wasser.

Die fluidische Kopplung des Kühlfluideinlasses 16a mit dem ersten Strömungskanal 17 der ersten Kühlplatte 14 ist dabei in Fig. 2 in größerem Detail gezeigt. Kühlfluid, welches über den Kühlfluideinlass 16 der erfindungsgemäßen Vorrichtung 10 zugeführt wird, strömt vom Kühlfluideinlass 16 in den ersten Strömungskanal 17 der ersten Kühlplatte 14 ein.

Fig. 2 zeigt einen Schlauch 20, der auf den Kühlfluideinlass 16a mit einem Ende aufgesteckt und vorzugsweise über eine Einpressverbindung bzw. Presspassung mit dem Kühlfluideinlass 16a verbunden ist. Dies ermöglicht bei beengtem Bauraum eine zuverlässige Verbindung des Schlauchs 20 mit dem Kühlfluideinlass 16a. Alternativ können der Schlauch 20 und der Kühlfluideinlass 16a auch über eine nicht gezeigte Schelle verbunden sein, um Kühlfluid dem Kühlfluideinlass 16a zuzuführen.

Ein derartiger Schlauch 20 ist vorzugsweise auch mit dem Kühlfluidauslass 16b verbunden.

Wie den Figuren entnommen werden kann, verfügen sowohl Kühlfluideinlass 16a als auch Kühlfluidauslass 16b an ihrer Außenkontur über widerhakenartige Vorsprünge 21, um den jeweiligen Schlauch 20 sicher und fluiddicht am Kühlfluideinlass 16a bzw. Kühlfluidauslass 16b zu halten.

Wie oben bereits ausgeführt, ist der erste Strömungskanal 17 der ersten Kühlplatte 14 nicht nur mit dem Kühlfluideinlass 16 fluidisch gekoppelt, sondern vielmehr auch mit den dritten Strömungskanälen 19 der ersten Kühlplatte 14 sowie über in Fig. 6 gezeigte Öffnungen 36 mit den zweiten Kühlplatten 15.

An der gegenüberliegenden Seite der ersten Kühlplatte 14 ist der zweite Strömungskanal 18 der ersten Kühlplatte 14 mit dem Kühlfluidauslass 16b fluidisch gekoppelt, ferner mit den dritten Strömungskanälen 19 der ersten Kühlplatte 14 sowie über Öffnungen 37 wiederum mit den zweiten Kühlplatten 15.

Jede der zweiten Kühlplatten 15 weist an der ersten Seite der ersten Kühlplatte 14 und damit an einer ersten Seite derselben einen ersten Strömungskanal 22 auf, der in einen ersten Teilkanal 22a und einen zweiten Teilkanal 22b unterteilt ist. Ferner weist jede zweite Kühlplatte 15 an der gegenüberliegenden zweiten Seite der ersten Kühlplatte 14 und damit an einer gegenüberliegenden zweiten Seite derselben einen zweiten Strömungskanal 23 auf, der ebenfalls in einem ersten Teilkanal 23a und einen zweiten Teilkanal 23b unterteilt ist.

Zwischen dem ersten Strömungskanal 22 der jeweiligen zweiten Kühlplatte 15 und dem zweiten Strömungskanal 23 der jeweiligen zweiten Kühlplatte 15 erstreckt sich mindestens ein dritter Strömungskanal 24, vorzugsweise mehrere dritte Strömungskanäle 24, und zwar im gezeigten Ausführungsbeispiel insbesondere drei Strömungskanäle 24, wobei jeweils zwei benachbarte dritte Strömungskanäle 24 in entgegengesetzten Richtungen durchströmt sind.

Der erste Teilkanal 22a des ersten Strömungskanals 22 einer jeden zweiten Kühlplatte 15 ist mit dem ersten Strömungskanal 17 der ersten Kühlplatte 14 fluidisch gekoppelt. Der zweite Teilkanal 23b des zweiten Strömungskanals 23 einer jeden zweiten Kühlplatte 15 ist mit dem zweiten Strömungskanal 18 der ersten Kühlplatte 14 fluidisch gekoppelt.

Der erste Strömungskanal 22 der jeweiligen zweiten Kühlplatte 15 weist ein Außenrohr 25 auf, welches in zwei getrennte Teilkammern 27, 28 unterteilt ist. Eine erste Teilkammer 27 des ersten Strömungskanals 22 der jeweiligen zweiten Kühlplatte 15 ist mit einem der mehreren dritten Strömungskanäle 24 der jeweiligen zweiten Kühlplatte 15 und mit dem ersten Strömungskanal 17 der ersten Kühlplatte 14 gekoppelt.

Eine zweite Teilkammer 28 des ersten Strömungskanals 22 der zweiten Kühlplatte 15 mit den anderen der mehreren dritten Strömungskanäle 24 der jeweiligen zweiten Kühlplatte 15 gekoppelt ist.

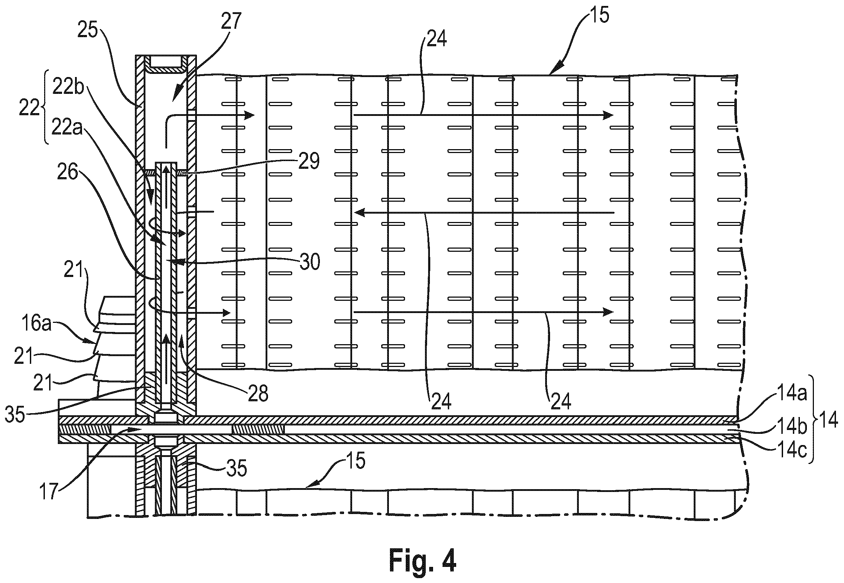

Wie am besten Fig. 4 entnommen werden kann, ist der erste Strömungskanal 22 der jeweilige zweiten Kühlplatte 15 im gezeigten Ausführungsbespiel von dem Außenrohr 25 und einem Innenrohr 26 gebildet. Das Innenrohr 26 erstreckt sich innerhalb des Außenrohrs 25 ausgehend von der ersten Kühlplatte 14 teilweise innerhalb des Außenrohrs 25 und mündet in die erste Teilkammer 27 des Außenrohrs 25. Diese erste Teilkammer 27 des Außenrohrs 25 ist von der zwischen dem Innenrohr 26 und dem Außenrohr 25 positionierten zweiten Teilkammer 28 des Außenrohrs 25 getrennt, und zwar vorzugsweise über eine Trennplatte 29.

Ein vom Innenrohr 26 begrenzter Hohlraum 30 bildet zusammen mit der ersten Teilkammer 27 des Außenrohrs 25 den ersten Teilkanal 22a des ersten Strömungskanals 22 der jeweiligen zweiten Kühlplatte 15. Die zweite Teilkammer 28 des Außenrohrs 25 bildet den zweiten Teilkanal 22b des ersten Strömungskanals 22 der jeweiligen zweiten Kühlplatte 15.

Das Innenrohr 26 bzw. der vom Innenrohr 26 definierte Hohlraum 30 desselben ist fluidisch mit dem ersten Strömungskanal 17 der ersten Kühlplatte 14 gekoppelt. Die erste Teilkammer 27 des Außenrohrs 25 der jeweiligen zweiten Kühlplatte 15 ist mit dem Hohlraum 30 des Innenrohrs 26 fluidisch gekoppelt, ferner mit einem der dritten Strömungskanäle 24 der jeweiligen zweiten Kühlplatte 15.

Bei demjenigen dritten Strömungskanal 24 der jeweiligen zweiten Kühlplatte 15, der mit der ersten Teilkammer 27 des Außenrohrs 25 fluidisch gekoppelt ist, handelt es sich um denjenigen dritten Strömungskanal 24 der jeweiligen zweiten Kühlplatte 15, der den größten Abstand von der ersten Kühlplatte 14 aufweist.

Die zweite Teilkammer 28 des Außenrohrs 25, die zwischen dem Innenrohr 26 und dem Außenrohr 25 ausgebildet ist und den zweiten Teilkanal 22b des ersten Strömungskanals 22 der jeweiligen zweiten Kühlplatte 15 bildet, ist mit den anderen dritten Strömungskanälen 24 der jeweiligen zweiten Kühlplatte 15 fluidisch gekoppelt.

Am gegenüberliegenden zweiten Ende der ersten Kühlplatte 14 sowie der jeweiligen zweiten Kühlplatte 15 ist der zweite Strömungskanal 23 der jeweiligen zweiten Kühlplatte 15 von einem Außenrohr 31 definiert und insbesondere über eine Trennplatte 32 in zwei getrennte Teilkammern 33, 34 unterteilt, wobei die Teilkammer 33 den ersten Teilkanal 23a und die Teilkammer 34 den zweiten Teilkanal 23b des zweiten Strömungskanals 23 der jeweiligen zweiten Kühlplatte 15 definiert.

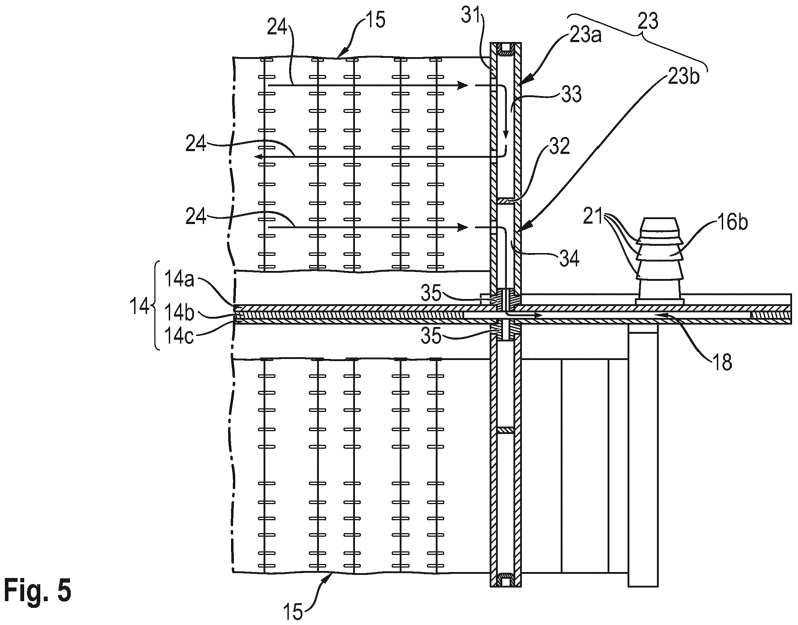

Dabei ist gemäß Fig. 5 die erste Teilkammer 33 und damit der erste Teilkanal 23a des zweiten Strömungskanals 23 der jeweiligen zweiten Kühlplatte 15 mit einigen der dritten Strömungskanäle 24 fluidisch gekoppelt, die zweite Teilkammer 34 und damit der zweite Teilkanal 23b des zweiten Strömungskanals 23 der jeweiligen zweiten Kühlplatte 15 ist sowohl mit einem der dritten Strömungskanäle 24 der jeweiligen zweiten Kühlplatte 14 als auch mit dem zweiten Strömungskanal 18 der ersten Kühlplatte 14 fluidisch gekoppelt.

Bei demjenigen dritten Strömungskanal 24 der jeweiligen zweiten Kühlplatte 15, der mit der zweiten Teilkammer 34 des Außenrohrs 31 fluidisch gekoppelt ist, handelt es sich um denjenigen dritten Strömungskanal 24 der jeweiligen zweiten Kühlplatte 15, der den geringsten Abstand von der ersten Kühlplatte 14 aufweist.

Kühlfluid, welches demnach über den Kühlfluideinlass 16a in den ersten Strömungskanal 17 der ersten Kühlplatte 14 einströmt, teilt sich in zwei Teilströmungen auf. Eine erste dieser Teilströmungen durchströmt ausschließlich die erste Kühlplatte 14 ausgehend vom ersten Strömungskanal 17 in Richtung auf den zweiten Strömungskanal 18 der ersten Kühlplatte 14 durch die dritten Strömungskanäle 19 der ersten Kühlplatte 14 hindurch.

Ein zweiter Teil dieser Strömung strömt vom ersten Strömungskanal 17 der ersten Kühlplatte 14 in die ersten Teilkanäle 22a der ersten Strömungskanäle 22 der zweiten Kühlplatten 15 ein, gelangt in die jeweilige Teilkammer 27 und von dort in einen der dritten Strömungskanäle 24 der jeweiligen zweiten Kühlplatte 15.

Über diesen dritten Strömungskanal 24 der jeweiligen zweiten Kühlplatte 15 strömt das Kühlfluid ausgehend von der ersten Seite der ersten Kühlplatte 14 in Richtung auf die zweite Seite der ersten Kühlplatte 14, dort in den ersten Teilkanal 23a des zweiten Strömungskanals 23 der jeweiligen zweiten Kühlplatte 15, von dort aus zurück in einem weiteren dritten Strömungskanal 24 der jeweiligen zweiten Kühlplatte 15 zurück in Richtung auf den ersten Strömungskanal 22 der jeweiligen zweiten Kühlplatte 15, um dort in den zweiten Teilkanal 22b den ersten Strömungskanals 22 einzutreten, von dort in einen weiteren dritten Strömungskanal 24 der jeweiligen zweiten Kühlplatte 15 einzutreten und denselben dann in Richtung auf den zweiten Teilkanal 23b des zweiten Strömungskanals 23 der jeweiligen zweiten Kühlplatte 15 zu durchströmen, anschließend in den zweiten Teilkanal 23b des zweiten Strömungskanals 23 der jeweiligen zweiten Kühlplatte 15 einzutreten und von dort aus in den zweiten Strömungskanal 18 der ersten Kühlplatte 14 zu strömen, um von dort aus über den Kühlfluidauslass 16b abzuströmen.

Wie am besten Fig. 3, 4 und 5 entnommen werden kann, sind die Strömungskanäle der Kühlplatten, nämlich der erste Strömungskanal 17 der ersten Kühlplatte 14 mit den ersten Strömungskanälen 22 der zweiten Kühlplatten 15 sowie die zweiten Strömungskanäle 23 der zweiten Kühlplatte 15 mit dem zweiten Strömungskanal 18 der ersten Kühlplatte 14 fluidisch gekoppelt, und zwar, wie im Zusammenhang mit Fig. 6 beschrieben, über die Öffnungen 36, 37, wobei sich in diese Öffnungen 36, 37 Stutzen 35 hinein erstrecken, um einen kontrollierten Übertritt des Kühlfluids vom ersten Strömungskanal 17 der ersten Kühlplatte 14 in die ersten Strömungskanäle 22 der zweiten Kühlplatten 15 und von den zweiten Strömungskanälen 23 der zweiten Kühlplatten 15 in den zweiten Strömungskanal 18 der ersten Kühlplatte 14 zu ermöglichen.

Die erfindungsgemäße Vorrichtung erlaubt eine effiziente Kühlung der Batteriezellen 13 einer Traktionsbatterie, die in übereinander angeordneten Batteriezellenebenen 11, 12 angeordnet sind, bei kompakter Bauform.

## Patentansprüche

1. Vorrichtung (10) zur Kühlung von in mindestens zwei übereinander positionierten Batteriezellenebenen (11, 12) angeordneten Batteriezellen (13) einer Traktionsbatterie eines Kraftfahrzeugs,
mit einer zwischen einer ersten Batteriezellenebene (11) und einer zweiten Batteriezellenebene (12) angeordneten ersten Kühlplatte (14), die in thermischem Kontakt mit den Batteriezellen (13) der ersten Batteriezellenebene (11) und in thermischem Kontakt mit den Batteriezellen (13) der zweiten Batteriezellenebene (12) steht,
mit mindestens einer innerhalb der ersten Batteriezellenebene (11) angeordneten zweiten Kühlplatte (15) und mindestens einer innerhalb der zweiten Batteriezellenebene (12) angeordneten weiteren zweiten Kühlplatte (15), die in thermischem Kontakt mit mehreren Batteriezellen (13) der jeweiligen Batteriezellenebene (11, 12) stehen,
mit einem Kühlfluideinlass (16a), der an einer ersten Seite der ersten Kühlplatte (14) ausgebildet ist,
mit einem Kühlfluidauslass (16b), der an einer zweiten Seite der ersten Kühlplatte (14) ausgebildet ist,
wobei die erste Kühlplatte (14), die zweiten Kühlplatten (15), der Kühlfluideinlass (16a) und der Kühlfluidauslass (16b) derart ausgebildet sind, dass
Kühlfluid vom Kühlfluideinlass (16a) an der ersten Seite der ersten Kühlplatte (14) in die erste Kühlplatte (14) strömt,
ein erster Teil des an der ersten Seite in die erste Kühlplatte (14) strömenden Kühlfluids durch die erste Kühlplatte (14) hindurch in Richtung auf die zweite Seite der ersten Kühlplatte (14) strömt,
ein zweiter Teil des an der ersten Seite in die erste Kühlplatte (14) strömenden Kühlfluids an der ersten Seite der ersten Kühlplatte (4) von der ersten Kühlplatte (14) in die zweiten Kühlplatten (15) strömt, die zweiten Kühlplatten (15) durchströmt und an der zweiten Seite der ersten Kühlplatte (14) von den zweiten Kühlplatten (15) in die erste Kühlplatte (14) strömt,
das Kühlfluid an der zweiten Seite der ersten Kühlplatte (14) von der ersten Kühlplatte (14) in den Kühlfluidauslass (16b) strömt.

2. Vorrichtung nach Anspruch 1, **dadurch gekennzeichnet, dass**
an der ersten Seite der ersten Kühlplatte (14) ein erster Strömungskanal (17) der ersten Kühlplatte (14) ausgebildet ist,
an der zweiten Seite der ersten Kühlplatte (14) ein zweiter Strömungskanal (18) der ersten Kühlplatte (14) ausgebildet ist,
sich zwischen dem ersten Strömungskanal (17) der ersten Kühlplatte (14) und dem zweiten Strömungskanal (18) der ersten Kühlplatte (14) mehrere dritte Strömungskanäle (19) der ersten Kühlplatte (14) erstrecken.

3. Vorrichtung nach Anspruch 2, **dadurch gekennzeichnet, dass**
der erste Strömungskanal (17) der ersten Kühlplatte (14) mit dem Kühlfluideinlass (16a), den zweiten Kühlplatten (15) und den dritten Strömungskanälen (19) der ersten Kühlplatte (14) gekoppelt ist,
der zweite Strömungskanal (18) der ersten Kühlplatte (14) mit dem Kühlfluidauslass (16b), den zweiten Kühlplatten (15) und den dritten Strömungskanälen (19) der ersten Kühlplatte (14) gekoppelt ist.

4. Vorrichtung nach Anspruch 2 oder 3, **dadurch gekennzeichnet, dass** der erste Strömungskanal (17) der ersten Kühlplatte (14) und der zweite Strömungskanal (18) der ersten Kühlplatte (14) jeweils eine größere Strömungsquerschnittsfläche aufweisen sind als die dritten Strömungskanäle (19) der ersten Kühlplatte (14).

5. Vorrichtung nach einem der Ansprüche 1 bis 4, **dadurch gekennzeichnet, dass**
die jeweilige zweite Kühlplatte (15) an der ersten Seite der ersten Kühlplatte (14) einen ersten Strömungskanal (22) aufweist, der in einen ersten Teilkanal (22a) und einen zweiten Teilkanal (22b) unterteilt ist,
die jeweilige zweite Kühlplatte (15) an der zweiten Seite der ersten Kühlplatte (14) einen zweiten Strömungskanal (23) aufweist, der ebenfalls in einen ersten Teilkanal (23a) und einen zweiten Teilkanal (23b) unterteilt ist,
sich zwischen dem ersten Strömungskanal (22) der jeweiligen zweiten Kühlplatte (15) und dem zweiten Strömungskanal (23) der jeweiligen zweiten Kühlplatte (15) mindestes ein dritter Strömungskanal (24) der jeweiligen zweiten Kühlplatte (15) erstreckt.

6. Vorrichtung nach Anspruch 5, **dadurch gekennzeichnet, dass**
der erste Teilkanal (22a) des ersten Strömungskanals (22) der jeweiligen zweiten Kühlplatte (15) mit dem ersten Strömungskanal (17) der ersten Kühlplatte (14) gekoppelt ist,
der zweite Teilkanalkanal (23b) des zweiten Strömungskanals (23) der jeweiligen zweiten Kühlplatte (15) mit dem zweiten Strömungskanal (18) der ersten Kühlplatte (14) gekoppelt ist.

7. Vorrichtung nach Anspruch 5 oder 6, **dadurch gekennzeichnet, dass**
der erste Strömungskanal (22) der jeweiligen zweiten Kühlplatte (15) ein Außenrohr (25) aufweist, welches in zwei getrennte Teilkammern (27, 28) unterteilt ist,
eine erste Teilkammer (27) des ersten Strömungskanals (22) der jeweiligen zweiten Kühlplatte (15) mit einem von mehreren dritten Strömungskanäle (24) der jeweiligen zweiten Kühlplatte (15) und mit dem ersten Strömungskanal (17) der ersten Kühlplatte (14) gekoppelt ist,
eine zweite Teilkammer (28) des ersten Strömungskanals (22) der jeweiligen zweiten Kühlplatte (15) mit den anderen der mehreren dritten Strömungskanäle (24) der jeweiligen zweiten Kühlplatte (15) gekoppelt ist.

8. Vorrichtung nach Anspruch 7, **dadurch gekennzeichnet, dass**
der erste Strömungskanal (22) der jeweiligen zweiten Kühlplatte (15) von dem Außenrohr (25) und einem Innenrohr (26) gebildet ist,
sich das Innenrohr (26) ausgehend von der ersten Kühlplatte (14) gesehen teilweise innerhalb des Außenrohrs (25) erstreckt und in die erste Teilkammer (27) des Außenrohrs (25) mündet, die von der zwischen dem Innenrohr (26) und dem Außenrohr (25) positionierten zweiten Teilkammer (28) des Außenrohrs (25) getrennt ist,
ein Hohlraum (30) des Innenrohrs (26) und die erste Teilkammer (27) des Außenrohrs (25) den ersten Teilkanal (22a) des ersten Strömungskanals (22) der jeweiligen zweiten Kühlplatte (15) bilden,
die zweite Teilkammer (28) des Außenrohrs (25) den zweiten Teilkanal (22b) des ersten Strömungskanals (22) der jeweiligen zweiten Kühlplatte bildet.

9. Vorrichtung nach Anspruch 7 oder 8, **dadurch gekennzeichnet, dass**
die erste Teilkammer (27) des ersten Strömungskanals (22) der jeweiligen zweiten Kühlplatte mit dem ersten Strömungskanal (17) der ersten Kühlplatte (14) und mit mindestens einem von mehreren dritten Strömungskanäle (24) der jeweiligen zweiten Kühlplatte (15) gekoppelt ist,
die zweite Teilkammer (28) des ersten Strömungskanals (22) der jeweiligen zweiten Kühlplatte (15) mit den anderen der mehreren dritten Strömungskanäle (24) der jeweiligen zweiten Kühlplatte (15) gekoppelt ist.

10. Vorrichtung nach Anspruch 5, 6, 7, 8 oder 9, **dadurch gekennzeichnet, dass**
der zweite Strömungskanal (23) der jeweiligen zweiten Kühlplatte (15) von einem Außenrohr (31) gebildet ist, das in zwei getrennte Teilkammern (33, 34) unterteilt ist,
eine zweite Teilkammer (34) des den zweiten Strömungskanal (23) der zweiten Kühlplatte (15) bildenden Außenrohrs (15) den zweiten Teilkanal (23b) des zweiten Strömungskanals (23) bildet und mit einem der mehreren dritten Strömungskanäle (24) der jeweiligen zweiten Kühlplatte (15) und mit dem zweiten Strömungskanal (18) der ersten Kühlplatte (14) gekoppelt ist,
eine erste Teilkammer (33) des den zweiten Strömungskanal (23) der zweiten Kühlplatte (15) bildenden Außenrohrs (31) den ersten Teilkanal (23a) des zweiten Strömungskanals (23) bildet mit den anderen der mehreren dritten Strömungskanäle (24) der jeweiligen zweiten Kühlplatte (15) gekoppelt ist.

11. Traktionsbatterie eines Kraftfahrzeugs,
mit mehreren in mindestens zwei übereinander positionierten Batteriezellenebenen (11, 12) angeordneten Batteriezellen (13),
mit einer Vorrichtung (10) zur Kühlung der Batteriezellen (13) nach einem der Ansprüche 1 bis 10.
